# FASCICULE DE BREVET EUROPEEN

(11) **EP 2 264 610 B1**
(45) Date de publication et mention de la délivrance du brevet: **21.09.2011**
(21) Numéro de dépôt: 10164557.0
(22) Date de dépôt: 01.06.2010
(51) Int. Cl.: G06F 13/40

(54) **Réseau d'interconnexions à sous-reseaux dynamiques**
Verbindungsnetz mit dynamischen Unternetzen
Interconnection network with dynamic sub-networks

(30) Priorité: 08.06.2009 FR 0953780
(43) Date de publication de la demande: 22.12.2010
(73) Titulaire: Commissariat à l'Énergie Atomique et aux Énergies Alternatives, 75015 Paris (FR)
(72) Inventeur: Jacquet, François, 38190, Froges (FR)
(74) Mandataire: Ilgart, Jean-Christophe

(56) Documents cités:
- EP-A2- 0 868 054
- FR-A5- 2 036 350
- US-A- 4 891 802

## Description

### DOMAINE TECHNIQUE

L'invention concerne un réseau d'interconnexions dynamique, c'est-à-dire un réseau dont la topologie, ou les connexions au sein de ce réseau, peut changer en fonction des sources et des destinations des données à acheminer. L'invention s'applique particulièrement à l'interconnexion de multiples processeurs (par exemple disposés en « cluster », ou grappe) à de multiples blocs mémoires, par exemple d'une mémoire partagée par ces processeurs.

### ÉTAT DE LA TECHNIQUE ANTÉRIEURE

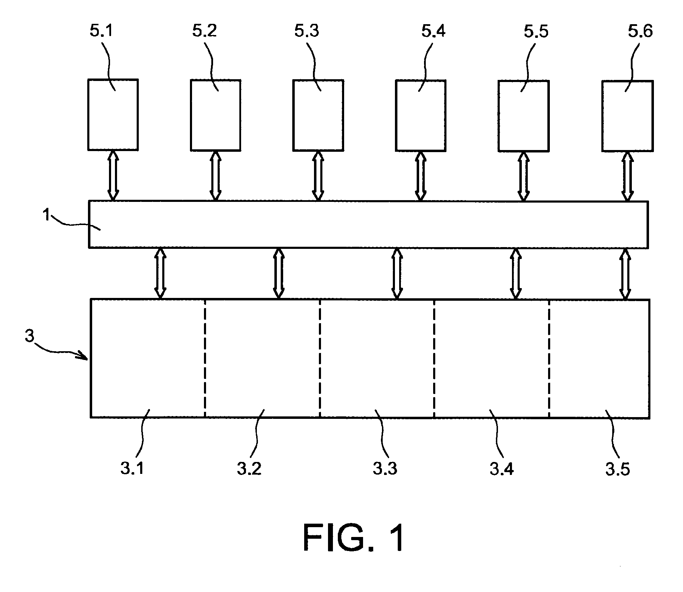

Un réseau d'interconnexions dynamique est un réseau dont la topologie, c'est-à-dire les connexions, peut varier au cours de l'exécution d'un programme ou entre plusieurs exécutions de programmes différents. Ce type de réseau d'interconnexions trouve notamment des applications dans le domaine des architectures informatiques parallèles. La figure 1 représente de manière schématique un réseau dynamique 1 reliant n premiers éléments, par exemple cinq blocs mémoires 3.1 - 3.5 d'une mémoire partagée 3, et m seconds éléments, par exemple des processeurs élémentaires 5.1 - 5.6, avec n et m nombres entiers naturels non nuls. Un tel réseau dynamique 1 permet à chaque processeur 5.1 - 5.6 de communiquer avec chacun des blocs mémoires 3.1 - 3.5. Ainsi, les données stockées dans les blocs mémoires 3.1 - 3.5 peuvent être partagées entre tous les processeurs 5.1 - 5.6.

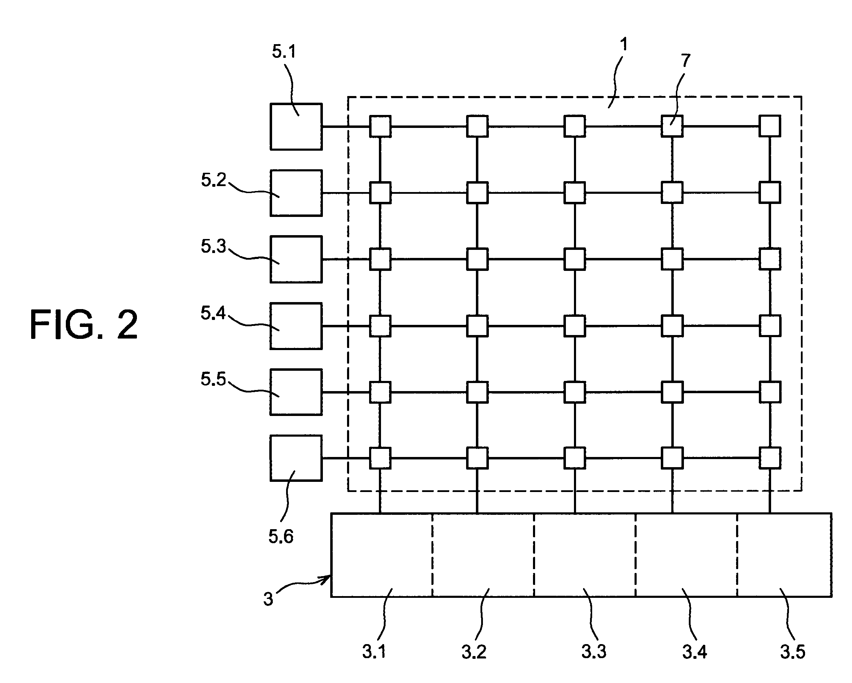

Ce réseau dynamique 1 peut être réalisé sous la forme d'un réseau « crossbar », comme représenté sur la figure 2. Ce réseau dynamique comporte n × m commutateurs 7, c'est-à-dire 30 commutateurs sur l'exemple de la figure 2, reliés entre eux sous la forme d'une grille 5 x 6 (6 lignes, 5 colonnes). Ainsi, lorsqu'un des processeurs 5.1 - 5.6 veut écrire ou lire des données dans un des blocs mémoires 3.1 - 3.5, les commutateurs 7 se trouvant sur un trajet reliant ce processeur et ce bloc mémoire sont actifs afin de former une liaison de communication entre ce processeur et ce bloc mémoire.

Un tel réseau a toutefois pour inconvénient que, dans certaines situations, un nombre limité de processeurs peuvent travailler simultanément. Par exemple, lorsque le processeur 5.6 écrit des données dans le bloc mémoire 3.5, il est alors impossible à un autre processeur de communiquer avec un des blocs mémoires 3.1 - 3.5, étant donné que tous les commutateurs permettant de former une liaison avec la mémoire partagée 3 sont occupés pour former le trajet de communication entre le processeur 5.6 et le bloc mémoire 3.5.

### EXPOSÉ DE L'INVENTION

Un but de la présente invention est de proposer une nouvelle architecture de réseau d'interconnexions permettant de réaliser simultanément plusieurs connexions parallèles et indépendantes de différents éléments entre eux.

Pour cela, la présente invention propose un réseau d'interconnexions de m premiers circuits électroniques à n seconds circuits électroniques, comprenant m sous-réseaux d'interconnexions, chaque sous-réseau d'interconnexions comportant :
- au moins un bus d'adressage et un bus de transfert d'informations reliant un des m premiers circuits à tous les n seconds circuits, le bus de transfert d'informations comportant une pluralité de portions de lignes de transmission de signaux reliées entre elles par des dispositifs de répétition de signaux,
- des moyens de commande des dispositifs de répétition, aptes à rendre actif au moins un des dispositifs de répétition en fonction de la valeur d'un signal d'adressage destiné à être envoyé sur le bus d'adressage par ledit un des m premiers circuits aux moyens de commande, le dispositif de répétition actif formant, dans le bus de transfert d'informations, un trajet de communication de signaux de données entre ledit un des m premiers circuits et au moins un des n seconds circuits et/ou entre au moins un premier des n seconds circuits et au moins un second des n seconds circuits,
m et n étant des nombres entiers strictement supérieurs à 1.

Ce réseau d'interconnexions s'applique de manière générale à tout type de circuits électroniques, électriques, microélectroniques, nanoélectroniques ou encore photoniques.

Un tel réseau offre aux m premiers circuits la possibilité de partager des informations telles que des données stockées et/ou lues dans les n seconds circuits. De plus, étant donné que ce réseau est composé d'autant de sous-réseaux que de premiers circuits, chacun des m sous-réseaux peut donc fonctionner de manière autonome et simultanément aux autres sous-réseaux. Ainsi, tous les m premiers circuits peuvent communiquer simultanément avec les n second circuits.

Du fait que seuls les dispositifs de répétition se trouvant sur le trajet entre les deux circuits s'échangeant des données peuvent être actifs, c'est-à-dire par exemple alimentés électriquement ou encore rendus passant, la consommation électrique de ce réseau d'interconnexions est inférieure à celle des réseaux d'interconnexions de l'art antérieur. Les moyens de commande peuvent donc rendre actifs certains des dispositifs de répétition et rendre inactifs les autres dispositifs de répétition pour former un trajet de communication dans le bus de transfert d'informations.

Les m premiers circuits peuvent être, ou comporter, des processeurs, et/ou les n seconds circuits peuvent être, ou comporter, des blocs mémoires d'une mémoire partagée par les m premiers circuits. Chaque bloc mémoire peut comporter plusieurs registres mémoires distincts.

Les dispositifs de répétition de signaux du bus de transfert d'informations peuvent être bidirectionnels, permettant à la fois des opérations de lecture et d'écriture sur ce même bus de communication.

Le bus d'adressage peut comporter une pluralité de portions de lignes de transmission de signaux, par exemple des fils électriquement conducteurs ou encore des lignes de transmission optique telles que des fibres optiques, reliées entre elles par des dispositifs de répétition de signaux.

Les dispositifs de répétition de signaux peuvent comporter des circuits logiques.

Les moyens de commande des dispositifs de répétition peuvent comporter en outre des moyens de sélection d'au moins un des n seconds circuits pour réaliser au moins une opération de lecture et/ou d'écriture de données dans ledit un des n seconds circuits, et/ou des moyens de gestion de priorité d'accès aux n seconds circuits par les m premiers circuits et/ou des moyens de mémorisation de plusieurs adresses de seconds circuits.

Les moyens de commande peuvent comporter une pluralité de dispositifs de commande, chaque dispositif de commande étant apte à rendre actif ou inactif un desdits dispositifs de répétition en fonction de la valeur du signal d'adressage.

Lorsque les n seconds circuits comportent des blocs mémoires d'une mémoire partagée, les dispositifs de commande peuvent être implémentés dans la mémoire partagée.

Les moyens de commande peuvent comporter n dispositifs de commande.

Chacun des dispositifs de commande peut comporter des circuits logiques similaires, un code distinct étant destiné à être appliqué en entrée de chaque dispositif de commande pour identifier au moins un des n seconds circuits. Ces codes peuvent être enregistrés, ou codés en dur, dans la mémoire, et appliqués sur les entrées des dispositifs de commande afin qu'ils puissent se différentier les uns des autres.

Chaque sous-réseau d'interconnexions peut comporter un second bus de transfert d'informations comprenant une pluralité de portions de lignes de transmission de signaux reliées entre elles par des seconds dispositifs de répétition de signaux, les moyens de commande étant aptes rendre actif au moins un des seconds dispositifs de répétition en fonction de la valeur du signal d'adressage, le second dispositif de répétition actif formant, dans le second bus de transfert d'informations, un trajet de communication de signaux entre ledit un des m premiers circuits et ledit un des n seconds circuits ou entre ledit un premier des n seconds circuits et ledit un second des n seconds circuits.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente de manière schématique un réseau d'interconnexions dynamique reliant plusieurs éléments entre eux,
- la figure 2 représente de manière schématique un réseau d'interconnexions de type crossbar, selon l'art antérieur, reliant plusieurs éléments entre eux,
- la figure 3 représente de manière schématique un exemple de sous-réseau d'interconnexions, reliant un premier circuit électronique à quatre seconds circuits électroniques, d'un réseau d'interconnexions, objet de la présente invention,
- la figure 4 représente un réseau d'interconnexions, objet de la présente invention, selon un mode de réalisation particulier, formant des liaisons dynamiques entre quatre processeurs et une mémoire partagée divisée en six blocs mémoires,
- les figures 5A et 5B représentent respectivement un exemple de réalisation et un symbole d'un répéteur faisant partie d'un dispositif de répétition utilisé dans un réseau d'interconnexions, objet de la présente invention, selon un mode de réalisation particulier,
- les figures 6 et 7 représentent des exemples de dispositifs de répétition faisant partie d'un réseau d'interconnexions, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

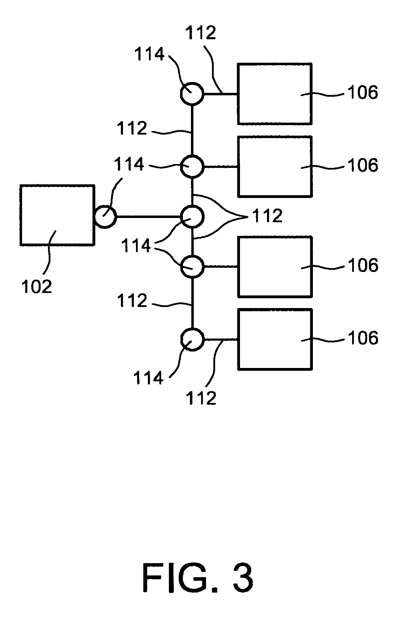

On se réfère tout d'abord à la figure 3 qui représente schématiquement un sous-réseau d'interconnexions reliant un premier circuit électronique 102, par exemple ici un processeur, à plusieurs seconds circuits électroniques 106, par exemple ici quatre blocs mémoires d'une mémoire partagée. Bien qu'un seul sous-réseau d'interconnexions soit représenté sur la figure 3, un réseau d'interconnexions auquel appartient ce sous-réseau d'interconnexions comporte un ou plusieurs autres sous-réseaux d'interconnexions, par exemple similaires au sous-réseau représenté sur cette figure 3, et reliant d'autres premiers circuits électroniques 102 aux quatre blocs mémoires 106.

Le sous-réseau d'interconnexions représenté sur la figure 3 permet au processeur 102 d'écrire ou de lire des données dans les blocs mémoires 106. Pour cela, le sous-réseau comporte plusieurs portions de lignes de transmission, par exemple des pistes conductrices, formant un bus d'adressage et un bus de transfert d'informations entre le processeur 102 et chacun des quatre blocs mémoires 106. Sur l'exemple de la figure 3, seul le bus de transfert d'informations est représenté par des portions de pistes conductrices 112.

Le bus de transfert d'informations est ici bidirectionnel et permet d'acheminer par exemple des signaux de données émis par le processeur 102 pour être écrits dans au moins un des blocs mémoires 106, et/ou des signaux de données qui sont lus par le processeur 102 depuis au moins un des blocs mémoires 106, et/ou encore des signaux de données acheminés depuis l'un des blocs mémoires 106 vers au moins un autre bloc mémoire 106 par la commande du processeur 102. Ce bus de transfert d'informations est également configurable, c'est-à-dire que chaque signal de données émis sur ce bus n'est transmis qu'au bloc mémoire 106 ou au processeur 102 auquel ce signal est destiné, en formant un trajet de communication spécifique dans le sous-réseau pour ce signal de données. Dans une variante, par exemple lorsque le sous-réseau n'est destiné qu'à transférer des données depuis le processeur 102 vers les blocs mémoires 106 ou inversement, le bus de transfert d'informations peut être unidirectionnel.

Le bus de transfert d'informations permet en outre d'acheminer des informations autres que les données proprement dites, par exemple des signaux de lecture / écriture dont la valeur indique si l'on réalise une opération de lecture ou une opération d'écriture dans le bloc mémoire 106, et éventuellement des signaux de validation de requête validant ou non la mise en oeuvre de l'opération de lecture / écriture. Le signal de lecture / écriture peut notamment être utilisé, lorsque le bus de transfert d'informations est bidirectionnel, pour déterminer le sens de transition des données dans ce bus (du processeur 102 vers un bloc mémoire 106 ou inversement). Il est également possible, lorsque chacun des blocs mémoires 106 comporte une pluralité de sous-blocs mémoires formant chacun un emplacement de mémorisation différent, tels que des registres mémoires, de faire transiter sur le bus de transfert d'informations l'adresse du sous-bloc mémoire de destination (appelée « Chip Select »), par exemple sous la forme d'un signal distinct du signal comportant les données envoyées ou encore d'un ou plusieurs bits concaténés aux bits des données envoyés. D'autres signaux peuvent également être transmis sur le bus de transfert d'informations.

Le bus d'adressage permet d'acheminer des signaux d'adressage de blocs mémoires 106 de destination, dont la valeur désigne le bloc mémoire 106 dans lequel l'opération de lecture ou d'écriture est réalisée. Ce bus d'adressage peut être unidirectionnel. Le bus d'adressage n'est ici pas configurable car les signaux envoyés sur le bus d'adressage sont transmis à tous les blocs mémoires 106 afin que chaque bloc mémoire 106 puisse analyser ces données et qu'un trajet de communication entre le processeur 102 et le bloc mémoire 106 de destination puisse être établi.

Le bus de transfert d'informations est configurable grâce à des dispositifs de répétition de signaux 114 disposés entre chaque portion de piste conductrice 112 et permettant de relier ces portions 112 entre elles et former ainsi des trajets de communication continus. Chacun de ces dispositifs de répétition 114 peut être rendu actif ou inactif, par exemple en l'alimentant électriquement ou non. Il est ainsi possible de définir dans chaque sous-réseau un trajet de communication en ne rendant actifs que les dispositifs de répétition 114 se trouvant sur le trajet entre le processeur 102 et le bloc mémoire 106 dans lequel le processeur 102 est destiné à écrire les données ou à partir duquel le processeur 102 est destiné à lire les données. Les dispositifs de répétition 114 sont activés ou non en fonction de la valeur du signal transmis sur le bus d'adressage qui est lu par des moyens de commande, non représentés sur la figure 3, ces moyens de commande alimentant ou non électriquement chacun des dispositifs de répétition 114 selon que le dispositif de répétition 114 se trouve ou non sur le trajet de communication à établir dans le bus de transfert d'informations.

Dans une variante, les moyens de commande peuvent comporter des registres aptes à mémoriser plusieurs adresses et ainsi configurer successivement plusieurs trajets de communication dans le bus de transfert d'informations afin d'acheminer successivement plusieurs signaux de données à des blocs mémoires 106 distincts et/ou au processeur 102.

En outre, il est également possible que le sous-réseau d'interconnexion comporte ici un second bus de transfert d'informations apte à transmettre d'autres signaux entre le processeur 102 et l'un des blocs mémoire 106, parallèlement au premier bus de transfert d'informations. De manière analogue au premier bus de transfert d'informations, ce second bus de transfert d'informations peut être configurable grâce à l'activation ou non de répéteurs pour former un trajet de communication spécifique entre le processeur 102 et au moins un des blocs mémoires 106 ou entre deux blocs mémoires 106. Ce second bus de transfert d'informations peut également être bidirectionnel ou unidirectionnel selon le type d'informations à acheminer.

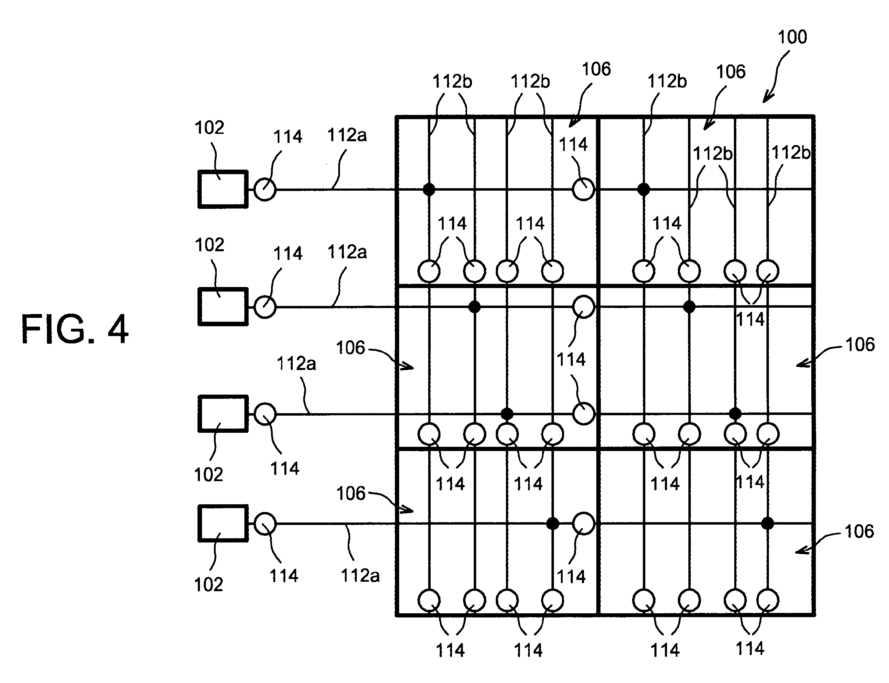

On se réfère maintenant à la figure 4 qui représente un réseau d'interconnexions 100 selon un mode de réalisation particulier, qui permet à quatre processeurs 102 d'écrire ou de lire des données dans une mémoire partagée 104, comportant plusieurs blocs mémoires 106 (dont six sont représentés sur la figure 4), simultanément et indépendamment les uns des autres. Ce réseau d'interconnexions 100 comporte plusieurs sous-réseaux, chaque sous-réseau reliant l'un des processeurs 102 aux six blocs mémoires 106 grâce à au moins un bus de transfert d'informations et un bus d'adressage. Chaque sous-réseau est composé de plusieurs faisceaux de fils électriquement conducteurs, ou portions conductrices (par exemple des pistes conductrices), formant un bus de transfert d'informations et un bus d'adressage entre l'un des processeurs 102 et chacun des blocs mémoires 106. Sur la figure 4, seul les bus de transfert d'informations comportant les portions de pistes conductrices 112a et 112b, sur lesquels transitent les données à écrire ou à lire des quatre sous-réseaux reliant chacun des processeurs 102 aux six les blocs mémoires 106 sont représentés.

Les bus de transfert d'informations de ces sous-réseaux sont bidirectionnels et permettent d'acheminer des signaux qui sont émis par l'un des processeurs 102 pour être écrits dans la mémoire 104, et/ou des signaux de données qui sont lus par l'un des processeurs 102 depuis cette mémoire 104, et/ou encore des signaux de données acheminés depuis l'un des blocs mémoires 106 vers un ou plusieurs autres blocs mémoires 106. Les bus de transfert d'informations sont également configurables, c'est-à-dire que chaque signal de données émis sur ces bus n'est transmis qu'au bloc mémoire 106 ou au processeur 102 auquel ce signal est destiné.

Dans le mode de réalisation décrit ici, les bus d'adressage, non représentés, permettent d'acheminer des signaux d'adressage de blocs mémoires 106 de destination, dont les valeurs désignent les blocs mémoires 106 dans lesquels les opérations de lecture ou d'écriture vont être réalisées. Ces bus d'adressage ne sont pas configurables car, contrairement aux signaux émis sur les bus de transfert d'informations, les signaux d'adressage envoyés sur les bus d'adressage sont transmis à tous les blocs mémoires 106 afin que chaque bloc mémoire puisse analyser ces données, que le bloc mémoire 106 concerné puisse être activé et qu'un trajet de communication entre le processeur 102 émetteur et le bloc mémoire 106 de destination puisse être établi.

Le nombre et la disposition des faisceaux de fils des sous-réseaux sont adaptés à la forme et aux dimensions de la mémoire partagée 104. Sur l'exemple de la figure 4, étant donné que les blocs mémoires 106 sont disposés en deux colonnes de trois blocs mémoires 106, chaque bus de sous-réseau d'interconnexions comporte deux faisceaux de fils verticaux 112b, chacun de ces faisceaux reliant les blocs mémoires 106 d'une même colonne entre eux, et un faisceau de fils horizontal 112a reliant l'un des processeurs 102 aux deux faisceaux de fils verticaux 112b.

Les faisceaux de fils 112a et 112b de chaque bus de chaque sous-réseau sont segmentés en plusieurs parties. Ainsi, la longueur de chaque segment de fil est réduite, ce qui permet de limiter les capacités formées par ces segments de fils. Des dispositifs de répétition des signaux 114 sont disposés entre chaque segment de fil de chaque faisceau de fils pour relier ces segments de fils entre eux et former des trajets de communication continus. Les dispositifs de répétition 114 permettent notamment de redresser la pente du signal transmis et donc de réaliser une transmission de signaux d'amplitude dans un temps suffisamment court sur l'ensemble des faisceaux de fils, entre les processeurs 102 et les blocs mémoires 106.

La disposition des différents éléments de chaque sous-réseau peut être choisie en fonction de la fréquence d'utilisation de ces éléments. Il est par exemple possible, lorsque l'un des processeurs 102 communique très fréquemment avec l'un des blocs mémoires 106, de former un trajet le plus court possible entre ce processeur 102 et ce bloc mémoire 106. La topologie des sous-réseaux pourra donc être choisie en fonction de l'utilisation de ces sous-réseaux par les différents circuits reliés par ces sous-réseaux.

Un dispositif de répétition 114 peut par exemple être disposé tous les 500 µm au niveau d'un faisceau de fils horizontal 112a, et tous les 250 µm au niveau d'un faisceau de fils vertical 112b. Ces dimensions correspondent donc également aux longueurs des segments de fils utilisés dans ce réseau d'interconnexions 100. Ces dimensions ne sont données qu'à titre d'exemple et dépendent de la technologie de réalisation des différents éléments du réseau d'interconnexions 100. Sur l'exemple de la figure 4, deux dispositifs de répétition 114 sont disposés au niveau de chaque faisceau de fils horizontal 112a reliant les processeurs 102 aux faisceaux de fils verticaux 112b. Trois dispositifs de répétition 114 sont présents sur chaque faisceau de fils vertical 112b, chaque dispositif de répétition 114 étant également connecté à l'un des blocs mémoire 106.

Cette structure de faisceaux de fils 112a, 112b et de dispositifs de répétition 114 est ici similaire pour chaque sous-réseau, facilitant ainsi la conception et la réalisation du réseau d'interconnexions 100.

Dans une variante, le réseau d'interconnexions 100 peut comporter un nombre différent de faisceaux de fils, et donc de bus. De plus, des signaux différents et/ou supplémentaires de ceux décrits précédemment peuvent également être émis sur les bus du réseau d'interconnexions 100. De manière générale, l'architecture du réseau d'interconnexions 100 et les signaux émis sur ce réseau dépendent de l'architecture des éléments destinés à être reliés par l'intermédiaire du réseau d'interconnexion 100.

Chacun de ces dispositifs de répétition 114 peut être activé ou non, selon qu'il soit alimenté électriquement ou non. Il est ainsi possible de définir dans chaque sous-réseau un unique trajet de communication en ne rendant actif que les dispositifs de répétition 114 se trouvant sur le trajet entre le processeur 102 et le bloc mémoire 106 dans lequel le processeur 102 est destiné à écrire des données ou à partir duquel le processeur 102 est destiné à lire les données.

Chaque bloc mémoire 106 comporte un dispositif de commande, également appelé arbitre de sélection et non représenté, permettant, en fonction de données d'adressage émises par le processeur 102 sur le bus d'adressage, de réaliser ou non la sélection de ce bloc mémoire 106 ainsi que d'activer ou non le dispositif de répétition 114 qui lui est associé, par exemple en l'alimentant ou non, ou en le rendant passant ou non. Le bloc mémoire 106 est sélectionné par l'arbitre qui lui est associé lorsque les données d'adressage transmises sur le bus d'adressage désignent ce bloc mémoire 106 pour réaliser une opération de lecture ou d'écriture de données. Dans le cas contraire, si le bloc mémoire 106 associé à cet arbitre n'est pas celui dans lequel l'opération de lecture ou d'écriture doit être réalisée, l'arbitre active ou non le dispositif de répétition 114 qui est relié au bloc mémoire 106 associé à cet arbitre selon que ce dispositif de répétition 114 se trouve ou non sur le trajet reliant le processeur 102 et le bloc mémoire 106 dans lequel l'opération de lecture ou d'écriture doit être réalisée. La transmission de données au sein d'un des blocs mémoires 106 est réalisée par l'intermédiaire d'un bus interne, non représenté, qui est également relié au dispositif de répétition 114 associé au bloc mémoire 106.

Les arbitres de sélection permettent également de gérer la priorité d'accès aux blocs mémoires 106 lorsque plusieurs processeurs veulent accéder simultanément à un même bloc mémoire 106 à travers différents sous-réseaux.

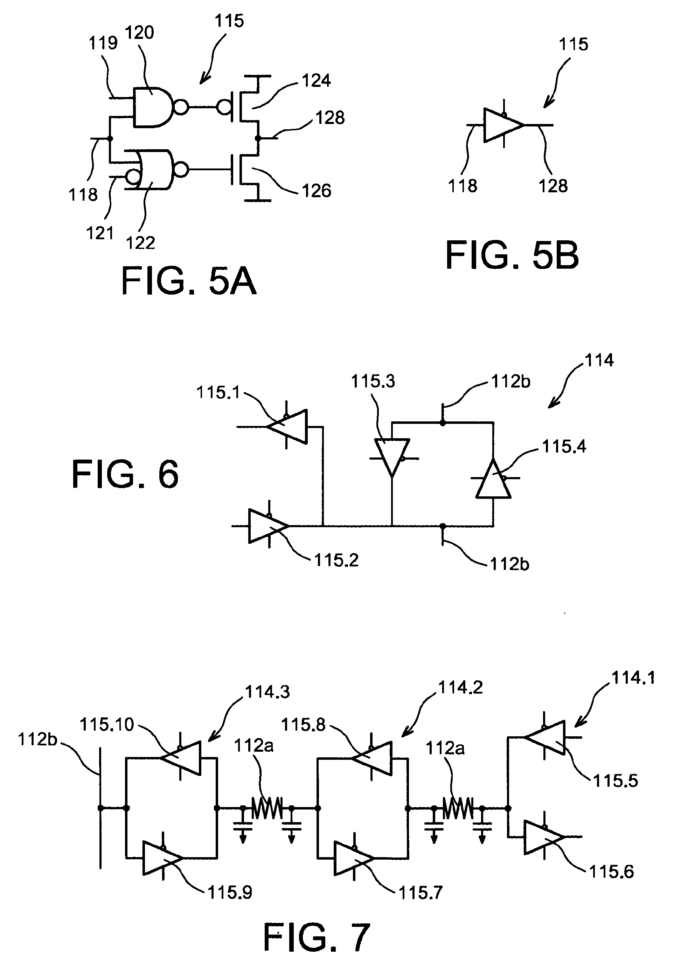

Les dispositifs de répétition 114 sont réalisés à partir de répéteurs 115. Un exemple de répéteur 115 est représenté sur la figure 5A. Ce répéteur 115 comporte une entrée 118 reliée à une entrée d'une porte NON ET 120 et à une entrée d'une porte NON OU 122. Les données que le répéteur transmet sont appliquées sur cette entrée 118. Le signal de lecture / écriture est appliqué sur la seconde entrée 119 de la porte NAND 120 et sur une seconde entrée 121 de la porte NOR 122. La sortie inversée de la porte NAND 120 est reliée à la grille d'un premier transistor MOS 124, et la sortie de la porte NOR 122 est reliée à la grille d'un second transistor MOS 126, la source du premier transistor 124 étant reliée au drain du second transistor 126 et formant une sortie 128 du répéteur 115. Ce répéteur 115 peut être représenté par le symbole illustré sur la figure 5B. Un tel répéteur 115 émet en sortie un bit de valeur identique à un bit appliqué en entrée. De plus, le niveau, ou l'amplitude, du signal de sortie est constant et ne dépend pas du niveau du signal d'entrée. Selon la valeur binaire du signal de lecture / écriture, le répéteur 115 émettra ou non un bit en sortie.

Les dispositifs de répétition 114 présents sur les faisceaux de fils verticaux 112b permettent de répéter l'information sur ces faisceaux de fils, mais également de transmettre l'information depuis ou vers les blocs mémoires 106. Un exemple de dispositif de répétition 114 disposé sur un des faisceaux de fils verticaux 112b est représenté sur la figure 6. Il comporte deux répéteurs 115.1 et 115.2 disposés têtes-bêches et reliés notamment au bus interne du bloc mémoire 106. Ces deux répéteurs 115.1, 115.2 sont commandés par la valeur du signal de lecture /écriture, l'un étant actif pendant que l'autre est inactif. Dans l'exemple de la figure 6, le répéteur 115.1 est actif lorsque des données sont écrites dans le bloc mémoire 106 (la sortie du répéteur 115.1 est reliée au bus de données), tandis que le second répéteur 115.2 est actif lorsque des données sont lues à partir du bloc mémoire 106 (l'entrée du répéteur 115.2 est reliée au bus de données). Ainsi, un seul des deux répéteurs 115.1, 115.2 est actif lors d'une opération de lecture ou d'écriture. Deux autres répéteurs 115.3 et 115.4 forment une interface entre deux segments du faisceau de fils vertical 112b. De manière analogue aux répéteurs 115.1, 115.2, seul l'un des deux répéteurs 115.3, 115.4 est actif lors de la transmission d'une information, selon que les données transmises soient des données de lecture ou d'écriture et en fonction de l'emplacement du dispositif de répétition 114 sur le faisceau de fils vertical 112b.

Les dispositifs de répétition 114 présents sur les faisceaux de fils horizontaux 112a permettent soit de transmettre une information entre un des processeurs 102 et un segment d'un des faisceaux de fils 112a, soit de répéter l'information entre deux segments de faisceau de fils horizontal 112a. Dans une variante, un tel dispositif de répétition pourrait également réaliser une interface de répétition entre un des faisceaux de fils verticaux 112b et un des faisceaux de fils horizontaux 112a.

Des exemples de ces différents dispositifs de répétition sont représentés sur la figure 7. On décrit tout d'abord un premier dispositif de répétition 114.1 destiné à former une interface entre un segment de faisceau de fils horizontal 112a et un des processeurs 102. Le premier dispositif de répétition 114.1 comporte un répéteur 115.5 commandé par le signal de lecture / écriture, et dont l'entrée est reliée au processeur 102 et dont la sortie est reliée au segment du faisceau de fils horizontal 112a. Ce répéteur 115.5 est actif lors d'une opération d'écriture d'informations dans un des blocs mémoires 106, ces informations allant du processeur au bloc mémoire 106 de destination. Ce premier dispositif de répétition 114.1 comporte également un second répéteur 115.6 monté tête-bêche par rapport au répéteur 115.5 et commandé également par le signal de lecture / écriture, dont l'entrée est reliée au segment du faisceau de fils horizontal 112a et la sortie au processeur 102. Le second répéteur 115.6 est actif lors d'une opération de lecture d'informations depuis l'un des blocs mémoires 106, ces informations allant du bloc mémoire 106 au processeur 102. Ce second répéteur 115.6 pourrait également être remplacé par une porte NAND dont l'une des entrées serait reliée au segment du faisceau de fils 112a, le signal de lecture / écriture étant appliqué sur une seconde entrée de cette porte NAND, et dont la sortie serait reliée au processeur 102.

Un second dispositif de répétition 114.2, disposé entre deux segments d'un faisceau de fils horizontal 112a, comporte deux répéteurs 115.7 et 115.8 montés têtes-bêches l'un par rapport à l'autre et commandés tous les deux par le signal de lecture /écriture. Ainsi, l'un ou l'autre de ces deux répéteurs 115.7, 115.8 est actif selon que l'on réalise une opération de lecture ou d'écriture de données. Un troisième dispositif de répétition 114.3, par exemple similaire au dispositif de répétition 114.2, peut être disposé entre un segment d'un faisceau de fils horizontal 112a et un segment d'un faisceau de fils vertical 112b.

Les arbitres, ou dispositifs de commande, sont ici conçus de façon générique par des éléments de logique combinatoire. Ainsi, tous les arbitres comportent une même structure logique réalisée à partir de circuits logiques identiques. Une adresse physique, par exemple codée en dur dans la mémoire 104, est attribuée à chaque arbitre en fonction de sa localisation physique dans la mémoire, c'est-à-dire en fonction de l'emplacement du bloc mémoire 106 auquel il est associé. Le fonctionnement des arbitres est régi par des fonctions logiques permettant d'activer uniquement les dispositifs de répétition utiles, c'est-à-dire ceux se trouvant sur le trajet entre le processeur et le bloc mémoire dans lequel les informations sont lues ou écrites. Les fonctions logiques sont telles que le trajet le plus direct, c'est-à-dire celui nécessitant le moins de dispositifs de répétition actifs, est réalisé par l'activation des bons dispositifs de répétition. Les autres dispositifs de répétition sont alors inactifs afin de limiter la consommation électrique du réseau d'interconnexions 100. Dans la configuration représentée sur la figure 4, le trajet minimal entre un des processeurs 102 et un des blocs mémoire 106 implique l'activation de deux dispositifs de répétition 114, dont un sur un des faisceaux de fils horizontaux 112a et un sur un des faisceaux de fils verticaux 112b. Le trajet maximal, correspondant à une communication entre un processeur se trouvant dans l'un des coins du système et un bloc mémoire 106 se trouvant dans le coin opposé à celui où se trouve le processeur, implique l'activation de cinq dispositifs de répétition 114, dont deux sur l'un des faisceaux de fils horizontaux 112a et trois sur l'un des faisceaux de fils verticaux 112b.

Dans l'exemple de la figure 4, la mémoire 104 comporte six blocs mémoires 106. Les adresses des blocs mémoires 106 peuvent être codées sur trois bits, désignés ici par ADDB(2:0). Etant donné que les six blocs mémoires 106 sont ici répartis en deux colonnes de trois blocs mémoires, il est possible d'attribuer les adresses aux bancs mémoires afin que le bit de poid fort (ADDB(2)) d'une adresse d'un bloc mémoire 106 indique la colonne dans laquelle se trouve le bloc mémoire (avec par exemple la valeur ADDB(2)=0 pour la première colonne, ADDB(2)=1 pour la seconde colonne). Ainsi, à partir de la valeur de ADDB(2), il est possible de déterminer quels sont les dispositifs de répétition 114 disposés sur les faisceaux de fils horizontaux 112a qui doivent être activés. De manière analogue, et étant donné que chaque dispositif de répétition 114 disposé sur un des faisceaux de fils verticaux 112b se trouve au niveau d'un bloc mémoire 106, les valeurs des bits ADDB(1:0) peuvent être utilisées pour déterminer quels dispositifs de répétition 114 disposés sur le faisceau de fils vertical 112b doivent être activés.

Dans une variante, il est possible de coder les adresses des dispositifs de répétition sur un nombre de bits plus important. Les fonctions logiques utilisées sont adaptées en fonction de l'architecture et de la configuration dans laquelle se trouve le réseau d'interconnexions.

Ainsi, en mettant en oeuvre ces fonctions logiques n'activant que les dispositifs de répétition 114 réellement utiles pour la transmission de l'information sur un trajet donné entre un des processeurs 102 et un des blocs mémoires 106, on économise une grande partie de l'énergie électrique qui était auparavant utilisée pour alimenter tous les dispositifs de répétition d'un réseau d'interconnexions. Ce principe s'applique particulièrement aux dispositifs de répétition des bus de transfert d'informations car ces bus représentent la plus grande source de consommation électrique dans un réseau d'interconnexions.

La consommation électrique du réseau d'interconnexions dépend principalement de deux facteurs : du taux d'activité du réseau, qui correspond à la fréquence de changement d'état (0 ou 1 selon la valeur des signaux) des fils par rapport à la fréquence d'horloge de fonctionnement, ainsi que de la localisation géographique du processeur par rapport au banc mémoire de destination, c'est-à-dire de la longueur du trajet de communication qui est proportionnel au nombre de dispositifs de répétition à activer. Il est également possible de réduire encore la consommation électrique du réseau d'interconnexions 100 en optimisant le placement des données dans les blocs mémoires 106. Par exemple, si une information est plus utilisée par un des processeurs par rapport aux autres processeurs, les données relatives à cette information peuvent dans ce cas être de préférence placées dans un bloc mémoire 106 se trouvant à proximité de ce processeur, réduisant ainsi le nombre de dispositifs de répétition devant être activés pour accéder à cette information. Cette optimisation du placement des données dans les blocs mémoires 106 peut notamment être réalisée par un compilateur de code lorsque les données sont par exemple des instructions de code machine stockées dans la mémoire 104.

## Revendications

1. Réseau d'interconnexions (100) de m premiers circuits électroniques (102) à n seconds circuits électroniques (106), comprenant m sous-réseaux d'interconnexions, chaque sous-réseau d'interconnexions comportant :
- au moins un bus d'adressage et un bus de transfert d'informations reliant un des m premiers circuits (102) à tous les n seconds circuits (106), le bus de transfert d'informations comportant une pluralité de portions de lignes de transmission de signaux (112a, 112b) reliées entre elles par des dispositifs de répétition de signaux (114 ; 114.1 - 114.3),
- des moyens de commande des dispositifs de répétition (114 ; 114.1 - 114.3), aptes à rendre actif au moins un des dispositifs de répétition (114 ; 114.1 - 114.3) en fonction de la valeur d'un signal d'adressage destiné à être envoyé sur le bus d'adressage par ledit un des m premiers circuits (102) aux moyens de commande, le dispositif de répétition (114 ; 114.1 - 114.3) actif formant, dans le bus de transfert d'informations, un trajet de communication de signaux de données entre ledit un des m premiers circuits (102) et au moins un des n seconds circuits (106) et/ou entre au moins un premier des n seconds circuits (106) et au moins un second des n seconds circuits (106),
m et n étant des nombres entiers strictement supérieurs à 1.

2. Réseau d'interconnexions (100) selon la revendication 1, dans lequel les m premiers circuits (102) comportent des processeurs et/ou les n seconds circuits (106) comportent des blocs mémoires d'une mémoire partagée (104) par les m premiers circuits (102).

3. Réseau d'interconnexions (100) selon l'une des revendications précédentes, dans lequel les dispositifs de répétition de signaux (114 ; 114.1 - 114.3) du bus de transfert d'informations sont bidirectionnels.

4. Réseau d'interconnexions (100) selon l'une des revendications précédentes, dans lequel le bus d'adressage comporte une pluralité de portions de lignes de transmission de signaux reliées entre elles par des dispositifs de répétition de signaux.

5. Réseau d'interconnexions (100) selon l'une des revendications précédentes, dans lequel les dispositifs de répétition de signaux (114, 114.1 - 114.3) comportent des circuits logiques.

6. Réseau d'interconnexions (100) selon l'une des revendications précédentes, dans lequel les moyens de commande comportent en outre des moyens de sélection d'au moins un des n seconds circuits (106) pour réaliser au moins une opération de lecture et/ou d'écriture de données dans ledit un des n seconds circuits (106) et/ou des moyens de gestion de priorité d'accès aux n seconds circuits (106) par les m premiers circuits (102) et/ou des moyens de mémorisation de plusieurs adresses de plusieurs seconds circuits (106).

7. Réseau d'interconnexions (100) selon l'une des revendications précédentes, dans lequel les moyens de commande comportent une pluralité de dispositifs de commande, chaque dispositif de commande étant apte à rendre actif ou inactif un desdits dispositifs de répétition (114 ; 114.1 - 114.3) en fonction de la valeur du signal d'adressage.

8. Réseau d'interconnexions (100) selon la revendication 7, dans lequel, lorsque les n seconds circuits (106) comportent des blocs mémoires d'une mémoire partagée (104), les dispositifs de commande sont implémentés dans la mémoire partagée (104).

9. Réseau d'interconnexions (100) selon l'une des revendications 7 ou 8, dans lequel les moyens de commande comportent n dispositifs de commande.

10. Réseau d'interconnexions (100) selon l'une des revendications 7 à 9, dans lequel chacun des dispositifs de commande comporte des circuits logiques similaires, un code distinct étant destiné à être appliqué en entrée de chaque dispositif de commande pour identifier au moins un des n seconds circuits (106).

11. Réseau d'interconnexions (100) selon l'une des revendications précédentes, dans lequel chaque sous-réseau d'interconnexions comporte un second bus de transfert d'informations comprenant une pluralité de portions de lignes de transmission de signaux reliées entre elles par des seconds dispositifs de répétition de signaux, les moyens de commande étant aptes rendre actif au moins un des seconds dispositifs de répétition en fonction de la valeur du signal d'adressage, le second dispositif de répétition actif formant, dans le second bus de transfert d'informations, un trajet de communication de signaux entre ledit un des m premiers circuits (102) et ledit un des n seconds circuits (106) ou entre ledit un premier des n seconds circuits (106) et ledit un second des n seconds circuits (106).

## Claims

1. Interconnection network (100) with m first electronic circuits (102) and n second electronic circuits (106), comprising m interconnection sub-networks, each interconnection sub-network comprising:
- at least one addressing bus and one information transfer bus connecting one of the m first circuits (102) to all the n second circuits (106), the information transfer bus comprising a plurality of portions of signal transmission lines (112a, 112b) connected to each other through signal repeater devices (114; 114.1 - 114.3),
- means of controlling repeater devices (114; 114.1 - 114.3), capable of making at least one of the repeater devices (114; 114.1 - 114.3) active depending on the value of an addressing signal to be sent to the addressing bus by said one of the m first circuits (102) to the control weans, the active repeater device (114; 114.1 - 114.3) forming a communication path in the information transfer bus for data signals between said one of the m first circuits (102) and at least one of the n second circuits (106) and/or between at least a first one of the n second circuits (106) and at least a second one of the n second circuits (106),
where m and n are integer numbers greater than 1.

2. Interconnection network (100) according to claim 1, in which the m first circuits (102) comprise processors and/or the n second circuits (106) comprise memory blocks of a memory (104) shared by the m first circuits (102).

3. Interconnection network (100) according to one of the previous claims, in which the signal repeater devices (114; 114.1 - 114.3) on the information transfer bus are two-directional.

4. Interconnection network (100) according to one of the previous claims, in which the addressing bus comprises a plurality of portions of signal transmission lines connected to each other by signal repeater devices.

5. Interconnection network (100) according to one of the previous claims, in which the signal repeater devices (114, 114.1 -114.3) comprise logical circuits.

6. Interconnection network (100) according to one of the previous claims, in which the control means also comprise means of selecting at least one of the n second circuits (106) to make at least one data read and/or write operation in said one of the n second circuits (106) and/or means of managing the access priority to the n second circuits (106) by the m first circuits (102) and/or means of memorizing several addresses of several second circuits (106).

7. Interconnection network (100) according to one of the previous claims, in which the control means comprise a plurality of control devices, each control device being capable of making one of said repeater devices (114; 114.1 - 114.3) active or inactive as a function of the value of the addressing signal.

8. Interconnection network (100) according to claim 7, in which when the n second circuits (106) comprise memory blocks of a shared memory (104), the control devices are implemented in the shared memory (104).

9. Interconnection network (100) according to one of claims 7 or 8, in which the control means comprise n control devices.

10. Interconnection network (100) according to one of claims 7 to 9, in which each of the control devices comprises similar logical circuits, a distinct code being designed to be applied at the input to each control device to identify at least one of the n second circuits (106).

11. Interconnection network (100) according to one of the previous claims, in which each interconnection sub-network comprise a second information transfer bus comprising a plurality of portions of signal transmission lines connected to each other through second signal repeater devices, the control means being capable of making at least one of the second repeater devices active as a function of the the value of the addressing signal, the second active repeater device forming a signal communication path between said one of the m first circuits (102) and said one of the n second circuits (106) or between said first of the n second circuits (106) and said second of the n second circuits (106), in the second information transfer bus.

## Patentansprüche

1. Verbindungsnetz (100) zur Verbindung von m ersten elektronischen Schaltungen (102) mit n zweiten elektronischen Schaltungen (106), wobei es m Verbindungsunternetze aufweist, und wobei jedes Verbindungsunternetz aufweist,:
- mindestens einen Adressbus und einen lnformationsübertragungsbus, der einen der m ersten Schaltungen (102) mit allen der n zweiten Schaltungen (106) verbindet, wobei der Informationsübertragungsbus eine Mehrzahl von Abschnitten von Signalübermittlungsleitungen (112a, 112b) aufweist, die mittels Signalwiederholungsvorrichtungen (114; 114.1 - 114.3) miteinander verbunden sind,
- Einrichtungen zur Steuerung der Wiederholungsvorrichtungen (114; 114.1 - 114.3), die geeignet sind, mindestens eine der Wiederholungsvorrichtungen (114: 114.1 - 114.3) in Abhängigkeit vom Wert eines Adresssignals zu aktivieren, das dazu bestimmt ist, auf dem Adressbus durch die eine der m ersten Schaltungen (102) zu den Steuereinrichtungen gesendet zu werden, wobei die aktive Wiederholungsvorrichtung (114; 114.1 - 114.3) in dem Informationsübertragungsbus einen Datensignalkommunikationsweg zwischen der einen der m ersten Schaltungen (102) und mindestens einer der n zweiten Schaltungen (106), und/oder zwischen mindestens einer ersten der n zweiten Schaltungen (106) und mindestens einer zweiten der n zweiten Schaltungen (100) bildet,
wobei m und n Ganzzahlen sind, die in jedem Fall größer als 1 sind.

2. Verbindungsnetz (100) nach Anspruch 1, bei dem die m ersten Schaltungen (102) Prozessoren aufweisen und/oder die n zweiten Schaltungen (106) Speicherblöcke eines Speichers (104) aufweisen, den sich die m ersten Schaltungen (102) teilen.

3. Verbindungsnetz (100) nach einem der vorhergehenden Ansprüche, bei dem die Signalwiederholungsvorrichtungen (114; 114.1-114.3) des informationsübertragungsbusses bidirektional sind.

4. Verbindungsnetz (100) nach einem der vorhergehenden Ansprüche, bei dem der Adressbus eine Mehrzahl von Abschnitten von Signalübermittlungsleitungen aufweist, die miteinander durch Signalwiederholungsvorrichtungen verbunden sind.

5. Verbindungsnetz (100) nach einem der vorhergehenden Ansprüche, bei dem die Signalwiederholungsvorrichtungen (114; 114.1 - 114.3) logische Schaltungen aufweisen.

6. Verbindungsnetz (100) nach einem der vorhergehenden Ansprüche, bei dem die Steuereinrichtungen außerdem Einrichtungen zur Auswahl mindestens einer der n zweiten Schaltungen (106), um mindestens eine Operation zum Lesen und/oder Schreiben von Daten in der einen der n zweiten Schabungen (106) durchzuführen und/oder Einrichtungen zur Verwaltung der Priorität des Zugriffs auf die n zweiten Schaltungen (106) durch die m ersten Schaltungen (102) und/oder Einrichtungen zur Speicherung von mehreren Adressen von mehreren zweiten Schaltungen (106) aufweisen.

7. Verbindungsnetz (100) nach einem der vorhergehenden Ansprüche, bei dem die Steuereinrichtungen eine Mehrzahl von Steuervorrichtungen aufweisen, wobei jede Steuervorrichtung geeignet ist, eine der Wiederholungsvorrichtungen (114; 114,1 - 114.3) in Abhängigkeit vom Wert des Adresssignals zu aktivieren oder zu deaktivieren.

8. Verbindungsnetz (100) nach Anspruch 7, bei dem, wenn die n zweiten Schaltungen (106) Speicherblöcke eines geteilten Speichers (104) aufweisen, die Steuervorrichtungen im geteilten Speicher (104) implementiert sind.

9. Verbindungsnetz (100) nach einem der Ansprüche 7 oder 8, bei dem die Steuereinrichtungen n Steuervorrichtungen aufweisen.

10. Verbindungsnetz (100) nach einem der Ansprüche 7 bis 9, bei dem jede der Steuervorrichtungen ähnliche logische Schaltungen aufweiset, wobei ein eindeutig festgelegter Code dazu bestimmt ist, an den Eingang einer jeden Steuervorrichtung angelegt zu werden, um mindestens eine der n zweiten Schaltungen (106) zu identifizieren.

11. Verbindungsnetz (100) nach einem der vorhergehenden Ansprüche, bei dem jedes Verbindungsunternetz einen zweiten Informationsübertragungsbus aufweist, der eine Mehrzahl von Abschnitten von Signalübermittlungsleitungen beinhaltet, die durch zweite Signalwiederholungsvorrichtungen miteinander verbunden sind, wobei die Steuereinrichtungen geeignet sind, mindestens eine der zweiten Wiederholungsvarrichtungen in Abhängigkeit vom Wert des Adresssignals zu aktivieren, wobei die zweite aktive Wiederhofungsvorrichtung im zweiten Informationsübertragungsbus einen Signalkommunikationsweg zwischen der einen der m ersten Schaltungen (102) und der einen der n zweiten Schaltungen (106) oder zwischen der einen ersten der n zweiten Schaltungen (106) und der einen zweiten der n zweiten Schaltungen (106) bildet.
